# EUROPÄISCHE PATENTSCHRIFT

(11) **EP 0 402 514 B1**
(45) Veröffentlichungstag und Bekanntmachung des Hinweises auf die Patenterteilung: **26.01.1994**
(21) Anmeldenummer: 89110966.2
(22) Anmeldetag: 16.06.1989
(51) Int. Cl.: H01M 4/66, H01M 4/80

(54) **Sinterfolien-Elektrode für Nickel-Cadmium-Akkumulatoren und Verfahren zur Herstellung der Elektrode**
Sintered foil electrode for nickel-cadmium batteries, and process for the preparation of the electrode
Electrode à feuille frittée pour accumulateurs au nickel-cadmium et procédé de préparation de l'électrode

(43) Veröffentlichungstag der Anmeldung: 19.12.1990
(73) Patentinhaber: HILLE & MÜLLER, D-40554 Düsseldorf (DE)
(72) Erfinder: Junkers, Dr.-Ing., D-5657 Haan 2 (DE); Schmidt, Ferdinand, D-4000 Düsseldorf 13 (DE); Ferenczy, Nikolaus, Dr.-Ing., D-5657 Haan (DE)
(74) Vertreter: Stenger, Watzke & Ring Patentanwälte

(56) Entgegenhaltungen:
- EP-A- 0 228 530
- DE-B- 1 114 870
- GB-A- 401 717
- US-A- 2 955 146
- US-A- 4 460 666
- PATENT ABSTRACTS OF JAPAN, Band 11, Nr. 113 (E-497)[2560], 9. April 1987; & JP-A-61 263 047 (YUASA BATTERY CO., LTD) 21-11-1986
- PATENT ABSTRACTS OF JAPAN, Band 12, Nr. 476 (E-693)[3323], 13. Dezember 1988; & JP-A-63 195 958 (MATSUSHITA ELECTRIC IND., CO., LTD) 15-08-1988

## Beschreibung

Die Erfindung betrifft eine Sinterfolien-Elektrode für Nickel-Cadmium-Akkumulatoren aus vernickeltem Stahlblech als perforiertem, bandförmigem Trägermaterial für darauf aufgetragenes Nickelpulver, das zu einer porösen Schicht versintert ist, wobei elektrochemisch aktive Masse in Form von Nickelhydroxid oder Cadmiumhydroxid in die Poren dieses Sinterkörpers eingelagert ist. Die Erfindung betrifft ferner ein Verfahren zur Herstellung einer solchen Sinterfolien-Elektrode.

Sinterfolien-Elektroden für Nickel-Cadmium-Akkumulatoren sind bekannt. Sie bestehen aus einem Trägermaterial, im allgemeinen perforiertes, vernickeltes Stahlblech, auf welches Nickelpulver aufgetragen und bei ca. 1.000 °C unter reduzierender Schutzgasatmosphäre zu einer porösen flexiblen Schicht versintert wird. Die elektrochemisch aktive Masse wird in mehreren Verfahrensschritten in die Poren dieses Sinterkörpers eingebracht. Hierbei wird im allgemeinen von einer Salzlösung, z.B. Nickel- oder Cadmiumnitrat, ausgegangen. Die Folie wird in diese Lösung eingetaucht, so daß sich die Poren füllen können. Danach werden die Sinterfolien getrocknet und wird in einem Fällprozeß das Nickel- bzw. Cadmiumsalz in das elektrochemisch aktive Material Nickelhydroxid bzw. Cadmiumhydroxid umgewandelt. Eine Wiederholung der Verfahrensschritte ist so lange erforderlich, bis die Folien die vorgeschriebene Menge an Nickelhydroxid bzw. Cadmiumhydroxid enthalten. Der Gehalt an elektrochemisch aktiver Masse bestimmt im wesentlichen die Kapazität und die weiteren elektrischen und mechanischen Eigenschaften der Sinterfolien-Elektroden und damit des Akkumulators. So sind bei der Konstruktion und Herstellung von Akkumulatoren wesentlich maßgebend das Erreichen einer hohen Stromaufnahme- und -abgabekapazität in Ampèrestunden, eine hohe Stromaufnahmekapazität bezogen auf das Eigengewicht (Ah/kg), eine hohe Spannungsstabilität in Abhängigkeit von der Entladezeit (günstige Entladungskurven), eine hohe Anzahl von Auflade- und Entladezyklen ohne nennenswerte Einbuße der vorgenannten Eigenschaften (Zyklenhaltbarkeit) sowie Lagerfähigkeit, Temperaturbeständigkeit, einfache Herstellungstechnologie, Reproduzierbarkeit der guten Qualität, Ausnutzung der Produktionsanlagen, Wirtschaftlichkeit und dergleichen.

Bei den bekannten Sinterfolien-Elektroden wird auf das vernickelte, perforierte Stahlblech als Trägermaterial fein verteiltes Nickelpulver aufgetragen und der Sinterprozeß durchgeführt. Im Sinne einer Verbesserung der Ampèrestunden, Stromaufnahme- und Stromabgabekapazität ist es generelle Zielsetzung, die wirksame Elektrodenoberfläche zu vergrößern, wozu rein geometrische Maßnahmen nur dann durchführbar sind, wenn des Leistung-Gewicht-Verhältnis außer Acht gelassen werden kann. In der Regel ist dies nicht möglich, so daß zur Vergrößerung der spezifischen Oberfläche der Elektrode die Entwicklung dahingeht, die aufgetragene Nickelpulverqualität zu verbessern, indem die spezifische Oberfläche pro Gewichtseinheit (m²/g) vergrößert wird. Nachteiligerweise hat sich hierbei herausgestellt, daß dann die Haftfestigkeit zwischen dem vernickelten, perforierten Trägermaterial und dem Nickelpulver mit höherer spezifischer aktiver Oberfläche immer schlechter wird.

Aus der EP-A 0 228 530 ist ein Stromableiter für eine mit alkalischem Elektrolyten in Verbindung stehende Metalloxidelektrode bekannt, dessen Oberfläche zur Herabsetzung des Kontaktwiderstandes mit einem zusätzlichen Fremdmetall versehen ist. Dieser Stromableiter wird bei galvanischen nichtaufladbaren Primärelementen mit einem gepreßten Metalloxid als positive Elektrode, einer aus Zinkpulver hergestellen negativen Elektrode und einem von einem Scheider aufgesaugten alkalischen Elektrolyten in einem Stahlgehäuse verwendet, insbesondere bei Alkali-Mangan-Zellen. Ein derartiger Stromableiter wird dadurch erzielt, daß zumindest im Oberflächenbereich des Ableiters Kolbalt in metallischer Form oder in Form einer kobalthaltigen Verbindung vorhanden ist.

Die GB-A 401 717 offenbart Nickel-Zink-Akkumulatoren, deren positive Elektroden aus rostfreiem Stahl nickelplattiert sind, wobei die Nickelplattierung in einer Sauerstoffatmosphäre bei angehobener Temperatur gehärtet ist, jedoch keine Sinterfolien-Elektroden für Nickel-Cadmium-Akumulatoren aus vernickeltem Stahlblech.

Der Erfindung liegt daher die Aufgabe zugrunde, Sinterfolien-Elektroden gleichermaßen durch Vergrößerung der wirksamen Oberfläche und der Haftungsfähigkeit der Beschichtung auf dem Trägermaterial zu verbessern und somit die elektrische Leistungsfähigkeit und mechanische Haltbarkeit der hergestellten Akkumulatoren zu steigern.

Die Aufgabe ist erfindungsgemäß dadurch gelöst, daß das Trägermaterial ein kaltgewalztes kohlenstoffarmes Stahlband ist, welches eine Nickelschicht in einer Stärke von 2 µm bis 6 µm und eine elektrolytisch oder chemisch aufgebrachte Kobalt- oder Cadmiumschicht mit einer Stärke von 0,1 µm bis 3 µm trägt, wobei Nickelpulver mit einer hohen spezifischen Oberfläche von BET 1,2 bis 4,7 m²/g bei einer Porosität von 85 bis 95 % bei einer erheblichen Verbesserung der Haftfestigkeit und mithin einer Erhöhung der Lade- und Entladekapazität der Zelle eingesetzt ist. Ein Kaltband aus Stahl mit einer entsprechenden elektrolytisch aufgebrachten Nickel- und Kobaltbeschichtung ist aus der DE-OS 37 26 518 an sich bekannt, ohne daß dort die erfindungsgemäße Anwendung angeregt ist.

Gemäß einer zweckmäßigen bevorzugten Ausgestaltung der Erfindung wird in Kombination mit dem erfindungsgemäßen Trägermaterial vorgeschlagen, das kaltgewalzte Stahlband vor seiner Vernickelung aufzurauhen, vorzugsweise mechanisch durch einen Walzvorgang, auf einen Rauhigkeitswert zwischen Ra = 0,6 bis 1,8 gemäß DIN 4768. Zweckmäßigerweise ist dabei das Stahlband bereits perforiert.

Durch die gezielte und reproduzierbare Aufrauhung der Oberfläche des Trägermaterials mit danach erfolgter porenarmer Vernickelung ist die Haftfestigkeit zwischen hochaktivem, großflächigem Nickelpulver und Trägermaterial wesentlich verbessert worden. In Kombination mit der elektrochemischen oder chemischen Kobaltierung und/oder Cadmierung der aufgerauhten und bereits vernickelten Oberfläche ergibt sich eine optimale Haftfestigkeit und sind hiermit verbunden wesentlich verbesserte elektrische und mechanische Eigenschaften von mit derartigen erfindungsgemäßen Sinterfolien-Elektroden hergestellten Nickel-Cadmium-Akkumulatoren.

Durch die Kombination eines Trägermaterials mit Kobalt- und/oder Cadmiumschicht mit einer vorher fein aufgerauhten und bereits vernickelten Oberfläche werden Haftfestigkeitswerte von 320 bis 400 kPa mit 90 % porösem Nickel-Pulver erzielt, wohingegen bisher bekannte Sinterfolien-Elektroden nur Haftfestigkeitswerte von ca. 180 bis 200 kPa, gemessen nach dem Sebastian-Test, zeigen. Obzwar der mechanischen Aufrauhung der Oberfläche der Vorzug nach den bisherigen Versuchsergebnissen gegeben wird, können auch elektrochemische oder chemische Verfahren angewendet werden.

Vorzugsweise wird ein kohlenstoffarmes Stahlband ferritischen Gefüges mit eingelagertem Zementit als Trägermaterial für Sinterfolien-Elektroden verwendet, welches mittlere Korngrößen zwischen 17,0 und 12,0 µm aufweist, wobei der Stahl 0,001 bis 0,070 % C, 0,170 bis 0,350 % Mn, 0,005 bis 0,020 % P, 0,005 bis 0,020 % S, 0,030 bis 0,060 % Al, 0,0015 bis 0,0070 % N, 0,003 bis 0,006 % B oder anstelle des Bors 0,005 bis 0,15 % Ti, Rest Eisen mit den üblichen Begleitelemten enthält (sämtliche Angaben in Gewichtsprozent). Vorzugsweise weist das Grundmetall eine Stahlanalyse mit
C 0,030 - 0,060 %
Mn 0,200 - 0,250 %
P 0,005 - 0,020 %
S 0,005 - 0,015 %
Al 0,030 - 0,060 %
N 0,0015 - 0,0070 %
Ti 0,005 - 0,015 %
Rest Eisen mit den üblichen Begleitelementen auf.

Vor allem werden die angestrebten Verbesserungen auch dadurch erreicht, daß gemäß einer zweckmäßigen Ausgestaltung der Erfindung ein Nickelpulver mit einer spezifischen Oberfläche BET 1,2 bis 4,7 m² pro Gramm, einem Porenvolumen gemessen mit einer Luftdurchlässigkeitsmessung (Fisher Sub-Siere Sizer - Methode) FSSS 0,6 bis 1,0 µm, einem Schüttgewicht AD (Scott) von 0,2 bis 1,0 g/ml und einer Porosität von 85 bis 95 % verwendet wird. Im späteren Verlauf der Herstellung wird das aufgetragene Nickelpulver bei ca. 1.000 °C gesintert, wobei bei dieser Temperatur auch eine Diffusion der Nickelschicht in das Grundmaterial erfolgt, wobei die mit der zusätzlichen Kobaltierung oder Cadmierung erzielte verbesserte Diffusion zu einer Erhöhung der Verbundfestigkeit führt.

Das erfindungsgemäße Verfahren zur Herstellung der oben beschriebenen Sinterfolien-Elektrode ist dadurch gekennzeichnet, daß als Ausgangsmaterial ein Warmband mit einer Stärke von 2,5 bis 3 mm verwendet wird, welches auf eine Endstärke von ca. 0,05 bis 0,20 mm kaltgewalzt wird, daß das Kaltband sodann mit speziellen Walzen rauher Oberfläche durch einen abschließenden Kaltwalzvorgang auf einen Ra-Wert von 0,7 bis 1,8 aufgerauht wird, das Band hieranschließend perforiert und nach elektrolytischer Entfettung, Spülen und Dekapieren in Schwefelsäure und nochmaligem Spülen in einem porenarm arbeitenden Nickelbad vernickelt wird, daß nach einem Spülvorgang hierauf eine elektrolytische Abscheidung der Kobaltschicht oder Cadmiumschicht durchgeführt wird und das so vorbereitete Trägermaterial mit in einer Cellulosemasse fein verteiltem Nickelpulver beschichtet und bei 1.000 °C gesintert wird, wonach abschließend die elektrochemisch aktive Masse in an sich bekannten Verfahrensschritten in die Poren dieses Sinterkörpers eingebracht wird.

Während der Wärmebehandlung wird nicht nur die Sinterung durchgeführt, sondern es erfolgt eine spezifische Diffusion der aufgetragenen elektrolytischen Nickelschicht in das Grundmaterial, wobei die Diffusiontiefe drei- bis viermal tiefer als diejenige Diffusion ist, die ohne Kobalt- oder Cadmiumbehandlung erfolgt.

Weitere Einzelheiten, Merkmale und Vorteile des Gegenstandes der Erfindung ergeben sich aus der nachfolgenden Beschreibung zweier Beispiele:

### Beispiel 1:

Für die Herstellung der Hochleistungselektrode für Nickel-Cadmium-Akkumulatoren wird ein kohlenstoffarmer Stahl nach folgender Spezifikation eingesetzt:
C 0,030 - 0,060 %
Mn 0,200 - 0,250 %
P 0,005 - 0,020 %
S 0,005 - 0,015 %
Al 0,030 - 0,060 %
N 0,0015 - 0,0070 %
Ti 0,005 - 0,015 %
Rest Eisen mit den üblichen Begleitelementen.

Das Ausgangsmaterial ist ein Warmband mit einer Gesamtdicke von 2,5 bis 3 mm. Das Band wird kaltgewalzt, bis die notwendige Endstärke (ca. 0,05 bis 0,20 mm) erreicht ist. Nach Erreichen der Endschichtstärke wird mit speziellen, aufgerauhten Walzen die Oberfläche aufgerauht, bis ein Ra-Wert von 0,7 bis 1,8 erreicht wird.

Nach Herstellen des Kaltbandes wird das Band perforiert und das perforierte Band wird wie folgt veredelt.

Nach elektrolytischer Entfettung, Spülen und Dekapieren in Schwefelsäure erfolgt nachmaliges Spülen und Vernickeln in einem porenarm arbeitenden Nickelbad. Nach der Vernickelung wird nochmals sorgfältige gespült und anschließend in elektrolytischem Kobalt- oder Cadmiumbad behandelt, anschließend wird wiederum sorgfältig gespült und getrocknet. Die so vorbereiteten perforierten Platten sind fertig für die weitere Sinternickelpulver-Beschichtung. Dieses hochaktive und großflächige, besonders poröse, Nickelpulver wird mit dem Bindemittel aufgetragen und bei 1.000 °C gesintert. Bei der 1.000 °C-Wärmebehandlung wird nicht nur die Sinterung durchgeführt, sondern es erfolgt eine spezifische Diffusion der aufgetragenen elektrolytischen Nickelschicht in das Grundmaterial. Diese Diffusiontiefe ist um dreibis viermal tiefer als diejenige Diffusion, die ohne Kobaltnachbehandlung erfolgen kann. Die weitere Verarbeitung erfolgt nach der üblichen Technologie (siehe unter anderem VARTA: "Gasdichte Nickel-Cadmium-Akkumulatoren" (1988), VDI-Verlag, Band 9, Seite 16-17). Die gesinterte Nickelschicht ist äußerst porös. Die Porosität beträgt 85 - 95 %. In diesen Poren wird Ni(OH)₂ bzw. Cd (OH) ₂ erzeugt, je nachdem ob positive oder negative Elektroden hergestelt werden.

Die Zusammensetzung der angewendeten elektrolytischen Bäder sind wie folgt.

Die erste Vernickelung, die ca. 2 bis 4 µm porenarme Nickelabscheidung ermöglicht, enthält:
60 - 80 g/l Ni (als Nickelsulfat und Nickelchlorid),
20 - 30 g/l Chloridionen in Form von Nickelchlorid,
ca. 40 g/l Borsäure,
0,3 - 1,2 g/l Para-Toluolsulfonamid,
Temperatur: 50 - 60 °C
Stromdichte: 6 - 10 A/dm²
pH-Wert: 3,5 - 3,8
Das Kobaltbad enthält folgende Bestandteile:

| | |
|---|---|
| CoSo₄ · 7H₂O | 300 - 350 g/l |
| CoCl₂ · 6H₂O | 40 - 60 g/l |
| NaCl | 15 - 25 g/l |
| Borsäure | 40 - 42 g/l |
| Schichtstärke | 0,01 - 0,8 µm |
| Temperatur | 50 - 70 °C |
| Stromdichte | 5 - 15 A/dm₂ |
| pH-Wert | 3,0 - 3,5 |

Wahlweise kann die Cadmierung erfolgen, wofür 2 Badtypen zur Anwendung kommen:
- zyanidisches, alkalisches Cadmiumbad,
- saures, Cadmiumsulfat enthaltendes, Cadmiumbad.

Als zyanidisches alkalisches Cadmiumbad kommt folgende Zusammensetzung zur Anwendung:

| | |
|---|---|
| Cadmium (als CdO) | 25 - 30 g/l |
| freies Natriumzyanid | 80 - 100 g/l |
| Natriumhydroxid | 10 - 15 g/l |
| Netzmittel (nicht schäumend) | 0,1 - 0,2 g/l |
| Temperatur | 25 - 30 °C |
| Stromdichte | 4 - 8 A/dm² |

Als saures Cadmiumbad wird folgende Zusammensetzung bevorzugt:

| | |
|---|---|
| Cadmiumsulfat | 50 - 80 g/l |
| Schwefelsäure (D=1,84) | 50 - 60 g/l |
| Gelatine | 5 - 10 g/l |
| Naphtalin-sulfon-saures Natrium | 3 - 5 g/l |
| Temperatur | 20 - 25 °C |
| Stromdichte | 2 - 5 A/dm² |

### Beispiel 2:

Ist identisch mit Beispiel 1; lediglich nach dem Auftragen der ersten 2 bis 4 µm dicken, porenarmen Nickelschicht wird das perforierte Band in einem Nickelelektrolyt wie oben beschrieben kurz vernickelt, worin sich als Suspension besonders hochaktives, großflächiges, feinverteiltes Nickelpulver befindet. Die Suspension beträgt ca. 0,05 bis 1 Gewichts-Prozent. Die weiteren technologischen Schritte sind mit denen in Beispiel 1 identisch.

## Patentansprüche

1. Sinterfolien-Elektrode für Nickel-Cadmium-Akkumulatoren aus vernickeltem Stahlblech als perforiertem, bandförmigen Trägermaterial für darauf aufgetragenes Nickelpulver, das zu einer porösen Schicht versintert ist, wobei elektrochemisch aktive Masse in Form von Nickelhydroxid oder Cadmiumhydroxid in die Poren dieses Sinterkörpers eingelagert ist,
**dadurch gekennzeichnet**,
daß das Trägermaterial ein kaltgewalztes kohlenstoffarmes Stahlband ist, welches eine Nickelschicht mit einer Stärke von 2 µm bis 6 µm und eine elektrolytisch oder chemisch aufgebrachte Kobalt- oder Cadmiumschicht mit einer Stärke von 0,1 µm bis 3 µm trägt und
daß des zur Ausbildung des Sinterkörpers verwendete Nickelpulver folgende Spezifikation hat:
| | |
|---|---|
| spezifische Oberfläche BET m²/g | 1,2 - 4,7 |
| FSSS µm | 0,6 - 1,0 |
| Schüttgewicht Ad (Scott) g/ml | 0,2 - 1,0 |
| Porosität | 85 - 95%. |

2. Sinterfolien-Elektrode nach Anspruch 1, dadurch gekennzeichnet, daß das kaltgewalzte Stahlband vor seiner Vernickelung aufgerauht ist, vorzugsweise mechanisch durch einen Walzvorgang, auf einen Rauhigkeitswert zwischen Ra = 0,6 bis 1,8.

3. Sinterfolien-Elektrode nach Anspruch 1 oder 2, dadurch gekennzeichnet, daß das Trägermaterial ein kohlenstoffarmes Stahlband ferritischen Gefüges mit eingelagertem Zementit ist, welches mittlere Korngrößen zwischen 17,0 und 12,0 µm aufweist, wobei der Stahl 0,01 bis 0,070 % C, 0,170 bis 0,350 % Mn, 0,005 bis 0,020 % P, 0,005 bis 0,020 % S, 0,030 bis 0,060 % Al, 0,015 bis 0,0070 % N, 0,003 bis 0,006 % B oder anstelle des Bors 0,005 bis 0,15 Ti, Rest Eisen mit den üblichen Begleitelementen enthält.

4. Sinterfolien-Elektrode nach einem der Ansprüche 1 bis 3, dadurch gekennzeichnet, daß das Grundmetall eine Stahlanalyse mit
C 0,030 - 0,060 %
Mn 0,200 - 0,250 %
P 0,005 - 0,020 %
S 0,005 - 0,015 %
Al 0,030 - 0,060 %
N 0,0015 - 0,0070 %
Ti 0,005 - 0,015 %
Rest Eisen mit den üblichen Begleitelementen
aufweist.

5. Verfahren zur Herstellung einer Sinterfolien-Elektrode gemäß einem der Ansprüche 1 bis 4, dadurch gekennzeichnet, daß als Ausgangsmaterial ein Warmband mit einer Stärke von 2,5 bis 3 mm verwendet wird, welches auf eine Endstärke von ca. 0,05 bis 0,20 mm kaltgewalzt wird, daß das Kaltband sodann mit speziellen Walzen rauher Oberfläche durch einen abschließenden Kaltwalzvorgang auf einen Ra-Wert von 0,7 bis 1,8 aufgerauht wird, das Band hieranschließend perforiert und nach elektrolytischer Entfettung, Spülen und Dekapieren in Schwefelsäure und nochmaligem Spülen in einem porenarm arbeitenden Nickelbad vernickelt wird, daß nach einem Spülvorgang hierauf eine elektrolytische Abscheidung der Kobaltschicht oder Cadmiumschicht durchgeführt wird und das so vorbereitete Trägermaterial mit in einer Cellulosemasse fein verteiltem Nickelpulver beschichtet und bei 1.000 °C gesintert wird, wonach abschließend die elektrochemisch aktive Masse in an sich bekannten Verfahrensschritten in die Poren dieses Sinterkörpers eingebracht wird.

## Claims

1. Sintered-film electrode for nickel-cadmium batteries made from nickel-plated steel sheet as perforated, tape-like support material for nickel powder applied thereto which is sintered to form a porous layer, electrochemically active composition in the form of nickel hydroxide or cadmium hydroxide being incorporated in the pores of this sintered body, characterised in that the support material is a cold-rolled low-carbon steel tape which supports a nickel layer at a thickness of 2 µm to 6 µm and an electrolytically or chemically applied cobalt layer or cadmium layer at a thickness of 0.1 µm to 3 µm, and in that the nickel powder used to form the sintered body has the following specification:
| | |
|---|---|
| specific surface area BET m²/g | 1.2 - 4.7 |
| FSSS µm | 0.6 - 1.0 |
| bulk density Ad (Scott) g/ml | 0.2 - 1.0 |
| porosity | 85 - 95 %. |

2. Sintered-film electrode according to claim 1, characterised in that the cold-rolled steel tape is roughened before being nickel-plated, preferably mechanically by means of a roller process, to a roughness value between Ra = 0.6 to 1.8.

3. Sintered-film electrode according to claim 1 or 2, characterised in that the support material is a low-carbon steel tape of ferritic structure with incorporated cementite which has average grain sizes between 17.0 and 12.0 µm, the steel containing 0.01 to 0.070 % C, 0.170 to 0.350 % Mn, 0.005 to 0.020 % P, 0.005 to 0.020 % S, 0.030 to 0.060 % Al, 0.015 to 0.0070 % N, 0.003 to 0.006 % B or instead of boron 0.005 to 0.15 Ti, the remainder iron with the conventional accompanying elements.

4. Sintered-film electrode according to one of claims 1 to 3, characterised in that the base metal has a steel analysis of
C 0.030 - 0.060 %
Mn 0.200 - 0.250 %
P 0.005 - 0.020 %
S 0.005 - 0.015 %
Al 0.030 - 0.060 %
N 0.0015 - 0.0070 %
Ti 0.005 - 0.015 %
remainder iron with the conventional accompanying elements.

5. Process for producing a sintered-film electrode according to one of claims 1 to 4, characterised in that a warm tape having a thickness of 2.5 to 3 mm is used as starting material and is cold-rolled to a final thickness of about 0.05 to 0.20 mm, in that the cold tape is then roughened using a special roller of rough surface by means of a final cold-rolling process to an Ra value from 0.7 to 1.8, the tape is then perforated, and after electrolytic degreasing, rinsing and pickling in sulphuric acid and further rinsing, is nickel-plated in a nickel bath operating to produce few pores, in that after a rinsing process, electrolytic deposition of the cobalt layer or cadmium layer is then carried out, and the support material thus prepared is coated with nickel powder finely divided in a cellulose composition and sintered at 1,000°C, then finally the electrochemically active composition is introduced into the pores of this sintered body in process steps known per se.

## Revendications

1. Electrode à feuille frittée destinée à des accumulateurs au nickel-cadmium en tôle d'acier nickelée en tant que matériau de support perforé, sous forme de feuillard, sur lequel est appliquée de la poudre de nickel qui est frittée en une couche poreuse, étant précisé qu'une masse électrochimique active est dispersée sous forme d'hydroxyde de nickel ou d'hydroxyde de cadmium dans les pores de ce corps fritté,
caractérisée en ce que
le matériau de support est un feuillard d'acier laminé à froid à faible teneur en carbone qui est revêtu d'une couche de nickel d'une épaisseur de 2 µm à 6 µm et d'une couche de cobalt ou de cadmium d'une épaisseur de 0,1 µm à 3 µm appliquée électrolytiquement ou chimiquement, et
en ce que la poudre de nickel utilisée pour la constitution du corps fritté a la spécification ci-après :
| | |
|---|---|
| surface spécifique BET m²/g | 1,2 à 4,7 |
| FSSS µm | 0,6 à 1,0 |
| densité apparente Ad (Scott) g/ml | 0,2 à 1,0 |
| porosité | 85 à 95 %. |

2. Electrode à feuille frittée selon la revendication 1, caractérisée en ce que le feuillard d'acier laminé à froid est grenelé avant son nickelage, de préférence mécaniquement par un processus de cylindrage, à une valeur de rugosité Ra comprise entre 0,6 à 1,8.

3. Electrode à feuille frittée selon l'une des revendications 1 ou 2, caractérisée en ce que le matériau de support est un feuillard d'acier à structure ferritique avec interstratification de cémentite ayant une granulométrie moyenne comprise entre 17,0 et 12,0 µm, étant précisé que l'acier contient 0,01 à 0,070 % de C, 0,170 à 0,350 % de Mn, 0,005 à 0,020 % de P, 0,005 à 0,020 % de S, 0,030 à 0,060 % d'Al, 0,015 à 0,0070 % de N, 0,003 à 0,006 % de B ou au lieu du bore 0,005 à 0,15 de Ti, pour le reste du fer avec les éléments d'accompagnement habituels.

4. Electrode à feuille frittée selon l'une des revendications 1 à 3, caractérisée en ce que le métal de base présente une analyse métallographique avec
C 0,030 à 0,060 %
Mn 0,200 à 0,250 %
P 0,005 à 0,020 %
S 0,005 à 0,015 %
Al 0,030 à 0,060 %
N 0,0015 à 0,0070 %
Ti 0,005 à 0,015 %
Pour le reste du fer avec les éléments d'accompagnement habituels.

5. Procédé pour la fabrication d'une électrode à feuille frittée selon l'une des revendications 1 à 4, caractérisé en ce que le matériau de départ utilisé est un feuillard laminé à chaud d'une épaisseur de 2,5 à 3 mm qui est laminé à froid jusqu'à obtention d'une épaisseur finale d'environ 0,05 à 0,20 mm, en ce que le feuillard. laminé à froid est ensuite grenelé à l'aide de cylindres spéciaux à surface grenelée par un cylindrage à froid final et amené à une valeur Ra de 0,7 à 1,8, en ce que suite à cela,- le feuillard est perforé, et après dégraissage électrolytique, rinçage, et décapage dans de l'acide sulfurique suivi d'un nouveau rinçage, il est nickelé dans un bain de nickelage travaillant à faible porosité, en ce qu'après un autre rinçage, il est procédé à un dépôt électrolytique de la couche de cobalt ou de la couche de cadmium, et en ce que le matériau de support ainsi préparé est revêtu d'une poudre de nickel finement répartie dans une masse cellulosique et frittée à une température de 1.000° C, après cela et pour finir, la masse électrochimique active est injectée dans les pores de ce corps fritté selon des phases de procédé connues.
